# EUROPÄISCHE PATENTSCHRIFT

(11) **EP 3 300 938 B1**
(45) Veröffentlichungstag und Bekanntmachung des Hinweises auf die Patenterteilung: **06.11.2019**
(21) Anmeldenummer: 17189566.7
(22) Anmeldetag: 06.09.2017
(51) Int. Cl.: B60K 11/06, B60K 11/08

(54) **KRAFTFAHRZEUG-UNTERBODENVERKLEIDUNG MIT LUFTEINLASS**
MOTOR VEHICLE UNDERBODY CLADDING WITH AIR INLET
REVÊTEMENT DE DESSOUS DE CAISSE DU VÉHICULE AUTOMOBILE DOTÉ DE L'ENTRÉE D'AIRE

(30) Priorität: 30.09.2016 DE 102016219034
(43) Veröffentlichungstag der Anmeldung: 04.04.2018
(73) Patentinhaber: Ford Global Technologies, LLC, Dearborn, MI 48126 (US)
(72) Erfinder: Wendelmuth, Harald, 56112 Lahnstein (DE); Fontana, Alberto, 50672 Köln (DE); Pyroth, Morten, 50733 Köln (DE); Nitsche, Thomas, 41464 Neuss (DE)
(74) Vertreter: Dörfler, Thomas

(56) Entgegenhaltungen:
- DE-A1- 4 102 073
- DE-A1- 19 952 782
- DE-A1-102007 045 057
- DE-A1-102014 118 631
- DE-T2-602005 000 699

## Beschreibung

Die Erfindung betrifft eine Kraftfahrzeug-Unterbodenverkleidung mit einem Lufteinlass, der zum Fahrzeug bzw. zur Fahrbahn hin durch ein oberes bzw. ein unteres flächiges Element abgegrenzt wird, die sich jeweils bogenförmig nach hinten und oben in Richtung auf einen Fahrzeugraum erstrecken, in dem sich zu kühlende Komponenten des Fahrzeugs befinden, gemäß dem Oberbegriff von Patentanspruch 1.

Eine derartige Unterbodenverkleidung ist aus der DE 10 2012 205 582 A1 bekannt. Diese Unterbodenverkleidung ist hier als Diffusor im Heckbereich eines Kraftfahrzeugs ausgestaltet, wobei das untere flächige Element durch eine Verkleidung des hinteren Stoßfängers gebildet wird und nicht frei endet, sondern sich in einem Bogen nach vorne krümmt.

Bei Kraftfahrzeugen mit einem Verbrennungsmotor im Frontbereich können sich insbesondere vor, seitlich und hinter dem Verbrennungsmotor Komponenten im Motorraum befinden, die von möglichst kühler Luft umströmt werden sollen, um optimal gekühlt zu werden. Diese Luft sollte kühler sein als die tendenziell wärmere Luft, die den Frontkühler und das zugehörige Gebläse durchströmt hat und dann in der Regel den übrigen Motorraum durchströmt, wobei die letztere Luft jedoch für andere Komponenten, insbesondere solche, die näher am Motor liegen, kühl genug sein kann. Allgemein kann der Lufteinlass jedoch auch für jede andere Art der Luftzufuhr für Geräte oder Komponenten dienen, nicht nur zur Kühlung.

Um hinter dem Verbrennungsmotor liegende Komponenten, die sich im Betrieb erwärmen und nicht zu heiß werden dürfen, mit Frischluft zu kühlen, kann man einen sog. NACA-Lufteinlass vorsehen, einen strömungsgünstigen Lufteinlass in der Unterbodenverkleidung, der sich unterhalb der Ölwanne des Motors erstreckt und in den hinter dem Motor liegenden Raum mündet. Ein NACA-Lufteinlass benötigt jedoch gewisse Mindestabmessungen, insbesondere eine gewisse Länge und Höhe in Bezug auf die Fahrzeuglängsrichtung, um effizient zu arbeiten, und zugleich muss sein unterstes Teil einen gesetzlich vorgeschriebenen Mindestabstand von der Fahrbahn haben. Daher schränkt ein NACA-Lufteinlass den darüber zur Verfügung stehenden Packungsraum im Motorraum ein.

Der NACA-Lufteinlass in der o. g. DE 10 2012 205 582 A1 hat zwar eine relativ geringe Bauhöhe, doch genügt diese hier deshalb, weil nur eine unmittelbar darüber liegende Komponente zu kühlen ist, nämlich ein Endschalldämpfer, der zudem in einem von der zugeführten Frischluft durchströmten Gehäuse angeordnet ist. Damit auch weiter oben im einem Motorraum liegende Komponenten gut angeströmt werden können, müsste der NACA-Lufteinlass auch bis dahin reichen, da anderenfalls eine vorzeitige Aufspaltung der kühlen Luftströmung stattfinden würde, insbesondere durch die im Motorraum zirkulierende wärmere Luft, die den Frontkühler und das zugehörige Gebläse durchströmt hat. Konstruktionsbedingt hat der NACA-Lufteinlass eine linear schräg verlaufende Rampe mit entsprechend relativ großer Bauhöhe. Die DE 60 2005 000699 zeigt eine Kraftfahrzeug-Unterbodenverkleidung mit einem Lufteinlass mit den Merkmalen des Oberbegriffs von Anspruch 1.

Der Erfindung liegt die Aufgabe zu Grunde, eine Kraftfahrzeug-Unterbodenverkleidung mit einem Lufteinlass derart auszugestalten, dass sie sowohl relativ wenig Platz in Anspruch nimmt sowie insbesondere in der Vertikalen, aber auch vor, seitlich oder hinter dem Verbrennungsmotor liegende Komponenten oder auch andere Komponenten wie z. B. ein Hinterachsdifferential optimal mit kühlender Frischluft versorgt. Diese Funktion sollte dabei möglichst neutral hinsichtlich schädlicher Widerstände, wie dem Fahrzeugluftwiderstand, gewährleistet sein.

Diese Aufgabe wird durch eine Unterbodenverkleidung mit den Merkmalen des Patentanspruchs 1 gelöst.

Vorteilhafte Weiterbildungen der Erfindung sind in den abhängigen Patentansprüchen angegeben.

Mit der Erfindung wird ein verbesserter NACA-Lufteinlass bereitgestellt, ein sog. "Flat Efficient Submerged Airintake Device" (FESAD)-Lufteinlass, der weniger schräg als ein NACA-Kanal verläuft und eine geringere Bauhöhe hat.

Gemäß der Erfindung schließt sich an das hintere Ende des oberen flächigen Elements eine ebene Luftstauplatte an, die ein Stück weit im Wesentlichen vertikal nach oben verläuft und dann im Wesentlichen frei im Fahrzeugraum endet, insbesondere im Motorraum. Diese vertikal von dem oberen flächigen Element abknickende Luftstauplatte lenkt die tendenziell wärmere Luft, die das Gebläse des Frontkühlers zwischen der Ölwanne und dem oberen flächigen Element hindurchtreten lässt, von der kühleren Luftströmung durch den NACA-Lufteinlass ab, so dass diese dadurch nicht gestört wird.

Es hat sich gezeigt, dass die Strömungstrennwirkung einer relativ kurzen ebenen Luftstauplatte, die von dem oberen flächigen Element abknickt und dann frei im Motorraum endet, praktisch ebenso gut ist wie wenn man das obere flächige Element in einem Bogen weiterführen würde, wobei es wesentlich länger sein müsste und damit mehr Platz im Motorraum einnehmen würde, damit die erwähnten besonders gut zu kühlenden Komponenten auch zuverlässig angeströmt werden.

Daher kann die erfindungsgemäße Unterbodenverkleidung im Ganzen oder zumindest partiell relativ flach gestaltet werden, besonders unterhalb des Verbrennungsmotors, weshalb der Motor und der ganze Antriebsstrang bei gleich bleibender Bodenfreiheit tiefer im Fahrzeug angeordnet werden können, wie es für manche Kraftfahrzeuge erwünscht ist.

In bevorzugten Ausführungsformen verläuft das obere flächige Element von einem in Fahrzeuglängsrichtung vor einem Verbrennungsmotor des Kraftfahrzeugs und unterhalb eines Frontkühlers liegenden vorderen Ende aus zunächst annähernd horizontal und in einem Abstand von z. B. einigen Zentimetern unter einer Ölwanne des Verbrennungsmotor hindurch und dann in einem kontinuierlich steiler werdenden Bogen zu seinem hinter der Ölwanne liegenden hinteren Ende, an das sich die Luftstauplatte anschließt.

In bevorzugten Ausführungsformen verläuft das untere flächige Element von einen in Fahrzeuglängsrichtung hinter dem hinteren Ende des oberen flächigen Elements liegenden vorderen Ende in einem wesentlich steileren Bogen als das obere flächige Element nach hinten und nach oben zu einem noch weiter hinten und wesentlich höher, z. B. um ca. 10 bis 50 Zentimeter, als das hintere Ende des oberen flächigen Elements liegenden hinteren Ende.

In bevorzugten Ausführungsformen liegt das vordere Ende des unteren flächigen Elements um eine gegebene Höhendifferenz von vorzugsweise einigen Zentimetern unterhalb des tiefsten Punkts des oberen flächigen Elements, welcher sich gewöhnlich an dessen vorderem Ende befindet.

Die ebene Luftstauplatte verläuft vorzugsweise einige Zentimeter weit im Wesentlichen vertikal nach oben bis zu ihrem freien Ende, wobei unter einigen Zentimetern hier ein Bereich von ca. 2 bis 10 Zentimeter verstanden wird.

In bevorzugten Ausführungsformen wird zumindest das obere flächige Element in Bezug auf die Fahrzeugquerrichtung von vorne nach hinten breiter.

Der Lufteinlass kann mindestens ein zusätzliches Luftleitblech enthalten, das parallel zu der beabsichtigen Luftströmung verläuft und den Luftstrom auf seinem Teil seines Weges durch den Lufteinlass in parallele Teilströme unterteilt.

Es folgt eine Beschreibung von Ausführungsbeispielen anhand der Zeichnungen. Darin zeigen:
- Fig. 1: eine schematische Schnittansicht eines FESAD-Lufteinlasses zum Kühlen von Komponenten im Motorraum eines Kraftfahrzeugs;
- Fig. 2: eine Ansicht des FESAD-Lufteinlasses in Fig. 1 von unten; und
- Fig. 3: eine schematische partielle Schnittansicht einer Weiterbildung des FESAD-Lufteinlasses von Fig. 1 und 2.

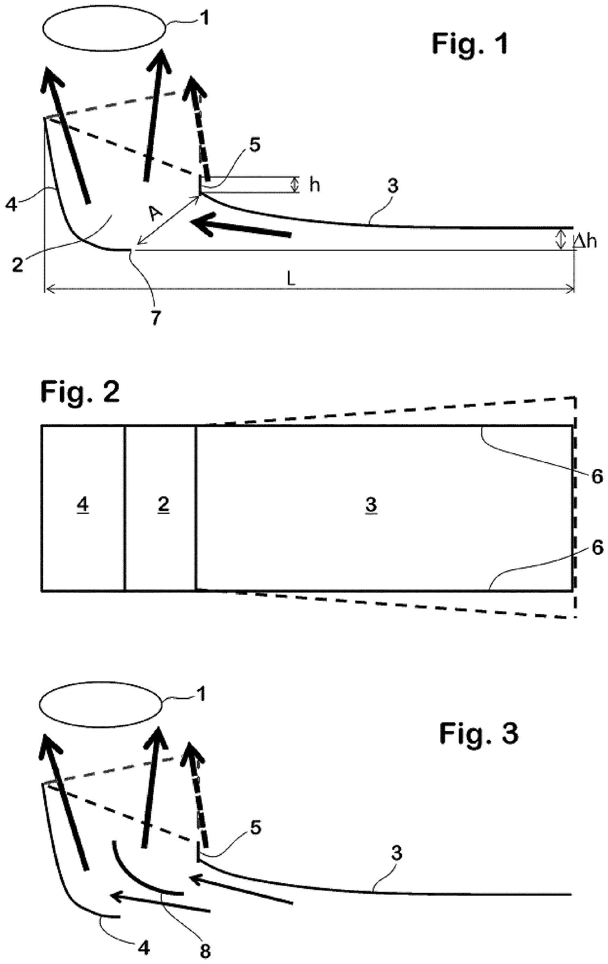

Fig. 1 zeigt beispielhaft in einem Längsschnitt durch ein Kraftfahrzeug schematisch einen Abschnitt eines vorne im Fahrzeug befindlichen Motorraums, in dem es einen elliptisch umringten Bereich 1 gibt, in dem sich eine oder mehrere Komponenten des Fahrzeugs bzw. seines Antriebs befinden, die im Betrieb warm werden und besonderer Kühlung bedürfen. Der Bereich 1 liegt in Fahrzeuglängsrichtung gesehen hinter einem nicht dargestellten Verbrennungsmotor.

Zur Kühlung der Komponenten im Bereich 1 dient ein FESAD-Lufteinlass 2, ein in einer nicht gezeigten Unterbodenverkleidung des Fahrzeugs ausgebildeter Kanal, der zum Motorraum und zum Motor hin durch ein oberes flächiges Element 3, das unterhalb eines nicht gezeigten Frontkühlers beginnt, und zur Fahrbahn hin durch ein unteres flächiges Element 4 sowie seitlich durch hier nicht gezeigte Seitenwände abgegrenzt wird. Die flächigen Elemente 3 und 4 erstrecken sich jeweils bogenförmig nach hinten und oben in Richtung auf den Bereich 1.

Während der Fahrt strömt relativ kühle Frischluft vom Unterboden in den Bereich 1, wie mit durchgezogenen Pfeilen angezeigt. Außerdem gibt es oberhalb des oberen flächigen Elements 3 einen mit einem gestrichelten Pfeil angezeigten relativ warmen Luftstrom von einem Gebläse eines Frontkühlers unter einer Ölwanne des Verbrennungsmotor hindurch, wobei sich der Verbrennungsmotor in der Figur links von dem gestrichelten Pfeil und oberhalb des oberen flächigen Elements 3 befindet.

Bei konventioneller Gestaltung des Lufteinlasses würden sowohl das obere flächige Element als auch das untere flächige Element in kontinuierlich steiler werdenden Bögen verlaufen. Bei einer derartigen Gestaltung würde jedoch ein Teil der oberhalb des oberen flächigen Elements strömenden wärmeren Luft in den zu kühlenden Bereich 1 gerichtet und die Frischluftströmung durch den Lufteinlass 2 behindern.

Bei der in Fig. 1 gezeigten Gestaltung schließt sich an das hintere Ende des oberen flächigen Elements 3 eine ebene Luftstauplatte 5 an, die eine Strecke h weit im Wesentlichen vertikal nach oben gerichtet verläuft und dann im Wesentlichen frei im Motorraum endet, wobei h im Wesentlichen nur durch im Bauraum befindliche Komponenten begrenzt ist, so dass der Lufteinlass 2 eine zu der kühlenden Komponente gerichtete Luftaustrittsfläche hat, die in Fig. 3 mit gestrichelten Linien angezeigt ist. Die Strecke h ist durch die sich im Bauraum ergebenden Bedingungen maximal auszulegen, und der Winkel, um den die Luftaustrittsfläche des FESAD-Lufteinlasses gegenüber der Fahrzeuglängsrichtung geneigt ist, ergibt sich aus den Bauraumbedingungen und beträgt in diesem Beispiel um die 20 Grad, mit einer Variation von +10 Grad.

Die kurze vertikal abknickende Luftstauplatte 5 hat die Wirkung, dass sie den wärmeren Luftstrom eher nach oben oder seitlich ablenkt, so dass die kühleren und wärmeren Luftströme auch hinter der Luftstauplatte 5 weitgehend getrennt bleiben und der Bereich 1 ausschließlich von der kühleren Luft beaufschlagt wird, wie gewünscht.

Die beschriebene und gezeigte Gestaltung ermöglicht es, die vertikale Erstreckung des FESAD-Lufteinlasses 2 kleiner zu machen als bei einem konventionell gestalteten NACA-Lufteinlass, so dass im Motorraum Platz gewonnen wird, besonders im Bereich oberhalb des oberen flächigen Elements 3.

Wie aus Fig. 2 ersichtlich, wird der Lufteinlass 2 seitlich durch Seitenwände 6 begrenzt, die sich mehr oder weniger vertikal zwischen dem oberen und dem unteren flächigen Element 3, 4 erstrecken und diese miteinander verbinden.

Wie in Fig. 3 mit gestrichelten Linien angezeigt, kann sich der Lufteinlass 2 und insbesondere das obere flächige Element 3 zusammen mit den Seitenwänden zur Fahrzeugfront hin verbreitern, um mehr Luft einzufangen und über seine Länge zu beschleunigen. Schneller strömende Luft erlaubt es, die Empfindlichkeit für Strömungsablösung durch wechselnde Druckverhältnisse im Motorraum an dem oberen flächigen Element 3 zu vermindern oder dieses stärker zu krümmen.

Wie aus Fig. 1 ersichtlich, wird ein in der Vertikalen wirksamer Öffnungsquerschnitt des Lufteinlasses 2 außer durch die vordere Breite des Lufteinlasses 2 durch ein Maß Δh bestimmt, um welches ein vorderes und unteres Ende 7 des unteren flächigen Elements 4 bzw. eine optional daran angebrachte Gummilippe tiefer liegt als das vordere und untere Ende des oberen flächigen Elements 3. Das Maß Δh kann sich z. B. in einem Bereich von einigen Millimetern bis 10 Zentimeter bewegen, wobei das Mindestmaß abhängig vom gewünschten Luftdurchsatz ist.

Ein diagonaler Öffnungsquerschnitt des Lufteinlasses 2 wird durch den Abstand A zwischen dem vorderen und unteren Ende 7 des unteren flächigen Elements 4 und der Verbindungsstelle zwischen dem oberen flächigen Element 3 und der Luftstauplatte 5 bestimmt. Der Lufteinlass 2 hat eine Gesamtlänge L.

Wie in der partiellen Schnittansicht von Fig. 3 gezeigt, können im Lufteinlass 2 zusätzlich ein oder mehrere bogenförmige Luftleitbleche 8 angeordnet sein, deren Krümmung an die Krümmungen der oberen und unteren flächigen Elemente 3, 4 angepasst ist, so dass sie parallel zu der beabsichtigen Luftströmung verlaufen und den Luftstrom durch den Lufteinlass 2 zunächst in parallele Teilströme aufspalten und dann wieder vereinen. Ein derartiges Luftleitblech 8 initiiert die Ausbildung einer neuen stabilen Grenzschicht im Luftstrom.

## Patentansprüche

1. Kraftfahrzeug-Unterbodenverkleidung mit einem Lufteinlass (2), der zum Fahrzeug bzw. zur Fahrbahn hin durch ein oberes bzw. ein unteres flächiges Element (4; 3) abgegrenzt wird, die sich jeweils bogenförmig nach hinten und oben in Richtung auf einen Fahrzeugraum (1) erstrecken, in dem sich zu kühlende Komponenten des Fahrzeugs befinden,
**dadurch gekennzeichnet, dass**
sich an das hintere Ende des oberen flächigen Elements (3) eine ebene Luftstauplatte (5) anschließt, die ein Stück (h) weit im Wesentlichen vertikal nach oben verläuft und dann im Wesentlichen frei in dem Fahrzeugraum (1) endet, isbesondere im Motorraum.

2. Unterbodenverkleidung nach Anspruch 1,
**dadurch gekennzeichnet, dass**
das obere flächige Element (3) von einem in Fahrzeuglängsrichtung vor einem Verbrennungsmotor des Kraftfahrzeugs und unterhalb eines Frontkühlers liegenden vorderen Ende aus zunächst annähernd horizontal und in einem Abstand unter einer Ölwanne des Verbrennungsmotor hindurch und dann in einem kontinuierlich steiler werdenden Bogen zu seinem hinter der Ölwanne liegenden hinteren Ende verläuft, an das sich die Luftstauplatte (5) anschließt.

3. Unterbodenverkleidung nach Anspruch 1 oder 2,
**dadurch gekennzeichnet, dass**
das untere flächige Element (4) von einen in Fahrzeuglängsrichtung hinter dem hinteren Ende des oberen flächigen Elements (3) liegenden vorderen Ende in einem steileren Bogen als das obere flächiges Element (3) nach hinten und nach oben zu einem noch weiter hinten und wesentlich höher als das hintere Ende des oberen flächigen Elements liegenden hinteren Ende verläuft.

4. Unterbodenverkleidung nach einem der vorhergehenden Ansprüche,
**dadurch gekennzeichnet, dass**
ein vorderes Ende (7) des unteren flächigen Elements (4) um eine gegebene Höhendifferenz (Δh) unterhalb des tiefsten Punkts des oberen flächigen Elements (3) oder unterhalb von dessen vorderem Ende liegt.

5. Unterbodenverkleidung nach Anspruch 4,
**dadurch gekennzeichnet, dass**
die Höhendifferenz (Δh) bis zu einigen Zentimetern beträgt.

6. Unterbodenverkleidung nach einem der vorhergehenden Ansprüche,
**dadurch gekennzeichnet, dass**
die ebene Luftstauplatte (5) einige Zentimeter weit im Wesentlichen vertikal nach oben gerichtet bis zu ihrem freien Ende verläuft.

7. Unterbodenverkleidung nach einem der vorhergehenden Ansprüche,
**dadurch gekennzeichnet, dass**
zumindest das obere flächige Element (3) von vorne nach hinten breiter wird.

8. Unterbodenverkleidung nach einem der vorhergehenden Ansprüche,
**dadurch gekennzeichnet, dass**
der Lufteinlass (2) mindestens ein zusätzliches Luftleitblech (8) enthält, das parallel zu der beabsichtigen Luftströmung verläuft und den Luftstrom auf seinem Teil seines Weges durch den Lufteinlass (2) in parallele Teilströme unterteilt.

## Claims

1. Motor vehicle underbody cladding having an air inlet (2), which is delimited with respect to the vehicle or to the roadway by an upper and a lower planar element (4; 3), which each extend rearwards and upwards in a curve in the direction of a vehicle compartment (1) in which components of the vehicle that are to be cooled are located,
**characterized in that**
the rear end of the upper planar element (3) is adjoined by a level air baffle plate (5), which extends a little way (h) directed substantially vertically upwards and then ends substantially freely in the vehicle compartment (1), in particular in the engine compartment.

2. Underbody cladding according to Claim 1,
**characterized in that**
the upper planar element (3) extends through from a front end located in the vehicle longitudinal direction, in front of an internal combustion engine of the motor vehicle and underneath a front radiator, initially approximately horizontally and at a distance under an oil sump of the internal combustion engine and then in a continuously steepening curve to its rear end, which is located behind the oil sump and is adjoined by the air baffle plate (5).

3. Underbody cladding according to Claim 1 or 2,
**characterized in that**
the lower planar element (4) extends rearwards from a front end located behind the rear end of the upper planar element (3) in the vehicle longitudinal direction in a steeper curve than the upper planar element (3) and upwards to a rear end, located still further back and substantially higher than the rear end of the upper planar element.

4. Underbody cladding according to one of the preceding claims,
**characterized in that**
a front end (7) of the lower planar element (4) is located by a given vertical difference (Δh) underneath the deepest point of the upper planar element (3) or underneath the front end of the latter.

5. Underbody cladding according to Claim 4,
**characterized in that**
the vertical difference (Δh) is up to a few centimetres.

6. Underbody cladding according to one of the preceding claims,
**characterized in that**
the flat air baffle plate (5) extends a few centimetres directed substantially vertically upwards as far as its free end.

7. Underbody cladding according to one of the preceding claims,
**characterized in that**
at least the upper planar element (3) becomes wider from front to back.

8. Underbody cladding according to one of the preceding claims,
**characterized in that**
the air inlet (2) contains at least one additional air guide plate (8), which extends parallel to the intended airflow and subdivides the air stream into parallel partial streams during its part of its path through the air inlet (2).

## Revendications

1. Habillage de bas de caisse pour véhicule automobile, comprenant une entrée d'air (2) qui est délimitée par rapport au véhicule ou par rapport à la chaussée par un élément plat (4 ; 3) supérieur ou inférieur, qui s'étend respectivement en forme d'arc vers l'arrière et le haut en direction d'un espace de véhicule (1) dans lequel se trouvent des composants à refroidir du véhicule,
**caractérisé en ce que**
une chicane à air (5) plane se rattache à l'extrémité arrière de l'élément plat (3) supérieur, laquelle suit un tracé sur une distance (h) donnée sensiblement verticalement vers le haut et se termine ensuite sensiblement librement dans l'espace de véhicule (1), notamment dans le compartiment du moteur.

2. Habillage de bas de caisse selon la revendication 1, **caractérisé en ce que** l'élément plat supérieur (3), à partir d'une extrémité avant qui se trouve devant un moteur à combustion interne du véhicule automobile dans une direction longitudinale de véhicule et au-dessous d'un radiateur avant, traverse tout d'abord un tracé approximativement horizontal et situé à un certain écart sous un carter d'huile du moteur à combustion interne et suit ensuite un tracé dans un arc qui devient continuellement plus raide, jusqu'à son extrémité arrière qui se trouve derrière le carter d'huile et à laquelle se rattache la chicane à air (5).

3. Habillage de bas de caisse selon la revendication 1 ou 2, **caractérisé en ce que** l'élément plat inférieur (4), à partir d'une extrémité avant qui se trouve derrière l'extrémité arrière de l'élément plat supérieur (3) dans une direction longitudinale de véhicule, suit un tracé en arc plus raide que celui de l'élément plat supérieur (3) vers l'arrière et vers le haut jusqu'à une extrémité arrière qui se trouve plus loin en arrière et nettement plus haut que l'extrémité arrière de l'élément plat supérieur.

4. Habillage de bas de caisse selon l'une des revendications précédentes, **caractérisé en ce qu'**une extrémité avant (7) de l'élément plat inférieur (4) se trouve à une différence de hauteur (Δh) donnée au-dessous du point le plus bas de l'élément plat supérieur (3) ou au-dessous de son extrémité avant.

5. Habillage de bas de caisse selon la revendication 4, **caractérisé en ce que** la différence de hauteur (Δh) peut atteindre quelques centimètres.

6. Habillage de bas de caisse selon l'une des revendications précédentes, **caractérisé en ce que** la chicane à air (5) plane suit un tracé jusqu'à son extrémité libre sur quelques centimètres en étant orientée sensiblement verticalement vers le haut.

7. Habillage de bas de caisse selon l'une des revendications précédentes, **caractérisé en ce qu'**au moins l'élément plat supérieur (3) devient plus large de l'avant vers l'arrière.

8. Habillage de bas de caisse selon l'une des revendications précédentes, **caractérisé en ce que** l'entrée d'air (2) contient au moins un déflecteur d'air (8) supplémentaire qui suit un tracé parallèle à l'écoulement d'air attendu et divise le courant d'air sur sa partie de son trajet à travers l'entrée d'air (2) en courants partiels parallèles.
